# NOUVEAU FASCICULE DE BREVET EUROPEEN

(11) **EP 2 376 366 B2**
(45) Date de publication et mention de la décision concernant l'opposition: **15.08.2018**
(45) Mention de la délivrance du brevet: 30.07.2014
(21) Numéro de dépôt: 10700969.8
(22) Date de dépôt: 07.01.2010
(51) Int. Cl.: B29C 49/42, B65G 47/84, B67C 7/00, B67C 3/22, B29C 49/06

(54) **INSTALLATION POUR LA PRODUCTION DE RÉCIPIENTS COMPORTANT UNE ROUE DE TRANSFERT ESCAMOTABLE**
ANLAGE ZUR HERSTELLUNG VON BEHÄLTERN MIT EINZIEHBAREM TRANSFERRAD
INSTALLATION FOR THE PRODUCTION OF CONTAINERS, COMPRISING A RETRACTABLE TRANSFER WHEEL

(30) Priorité: 13.01.2009 FR 0950154
(43) Date de publication de la demande: 19.10.2011
(73) Titulaire: Sidel Participations, 76930 Octeville-sur-Mer (FR)
(72) Inventeur: QUETEL, François, F-76930 Octeville Sur Mer (FR); DEMARE, Jérôme, F-76930 Octeville Sur Mer (FR)
(74) Mandataire: Grassin d'Alphonse, Emmanuel Jean Marie
(86) Numéro de dépôt international: PCT/EP2010/050105
(87) Numéro de publication internationale: WO 2010/081759

(56) Documents cités:
- WO-A1-96/18541
- WO-A1-98/47770
- DE-A1- 19 928 325
- DE-A1-102005 012 507
- DE-A1-102006 035 109
- DE-A1-102006 053 193
- FR-A1- 2 766 169
- JP-A- 2003 237 936
- US-A- 3 035 886

## Description

L'invention concerne une installation pour la production de récipients comportant une roue de transfert escamotable.

L'invention concerne plus particulièrement une installation pour la production de récipients, notamment de bouteilles, comportant au moins :
- une première enceinte de protection délimitant une première zone à l'intérieur de laquelle est agencée au moins une unité de soufflage de récipients,
- une deuxième enceinte de confinement qui, au moins en partie accolée à la première enceinte attenante par une partie commune, délimite une deuxième zone stérile à l'intérieur de laquelle est agencée au moins une unité de remplissage des récipients fabriqués,
- au moins une ouverture qui, réalisée dans ladite partie commune desdites première et deuxième enceintes, est destinée à permettre le transfert des récipients de l'unité de soufflage à l'unité de remplissage,
- des moyens d'obturation de ladite ouverture qui sont aptes à être déplacés sélectivement entre une position ouverte dans laquelle les moyens d'obturation autorisent ledit transfert des récipients à travers l'ouverture commune et une position fermée dans laquelle les moyens d'obturation interdisent tout transfert en isolant la deuxième enceinte pour réaliser une décontamination de l'unité de remplissage, et
- au moins un dispositif de transfert comportant au moins une roue de transfert qui, adjacente à ladite ouverture, est apte à transférer les récipients entre l'unité de soufflage et l'unité de remplissage.

Une telle installation de production est par exemple utilisée pour la fabrication de bouteilles en matière plastique, notamment en PET (Polyéthylène téréphtalate).

De manière connue, on y procède successivement au conditionnement thermique de préformes dans un four puis à la transformation des préformes en bouteilles dans l'unité de soufflage, la mise en forme étant réalisée par soufflage ou par étirage-soufflage dans un moule et les récipients obtenus transférés vers une unité de remplissage et de bouchage.

L'installation comporte ainsi, en amont de l'unité de remplissage, une unité de fabrication comportant de préférence un four de conditionnement thermique et une unité de soufflage.

Généralement, l'unité de remplissage et l'unité de fabrication, à tout le moins l'unité de soufflage, sont juxtaposées pour obtenir une installation de production monobloc qui soit compacte et apte à réaliser intégralement le processus de production, jusqu'à l'obtention de produits finis.

Dans une telle installation de production de récipients, on recherche par tous moyens à réduire les risques de contamination des récipients, lesquels sont de surcroît susceptibles d'être remplis avec des produits plus ou moins sensibles à de tels risques.

Par conséquent, il est connu d'y mettre en oeuvre différentes actions aux seules fins de contrôler et de maîtriser la qualité microbiologique de l'environnement de production, c'est-à-dire l'élimination des agents pathogènes, tels que les germes, spores, bactéries, etc. qui sont susceptibles d'affecter le contenu des récipients en le rendant notamment impropre à la consommation.

Pour ce faire, les actions ne visent pas exclusivement la décontamination des récipients mais également celles des préformes à partir desquelles ils sont fabriqués ainsi que celle de l'installation elle-même en général.

Les documents de l'état de la technique cités ci-après et auxquels on se reportera pour de plus amples détails, illustrent uniquement à titre d'exemple non limitatifs de telles actions.

Le document WO-2006/136498 décrit par exemple la décontamination d'une préforme par projection d'un jet de vapeur de produit stérilisant déposé par condensation sur la paroi interne de la préforme, sous la forme d'un film de buée de produit stérilisant sensiblement uniforme, afin de décontaminer ladite paroi interne.

Le document WO-2008/049876 décrit également la décontamination de la paroi externe d'une préforme lors de son conditionnement thermique dans un four par l'application combinée de rayonnements infrarouges et de rayonnements ultraviolets.

Le document FR-2.915.127 décrit encore une installation comportant une enceinte de protection délimitant une zone à l'intérieur de laquelle est agencée une unité de fabrication de récipients comportant une machine de moulage par soufflage ou étirage-soufflage alimentée par des moyens de transfert en préformes préalablement conditionnées thermiquement dans un four, ladite installation comportant un système d'insufflation d'air filtré à l'intérieur de l'enceinte pour y établir une surpression de manière à limiter les risques de contaminations, des préformes dans la zone de sortie du four, comme des récipients fabriqués.

Bien entendu, ces différents exemples d'actions sont susceptibles d'être simultanément mis en oeuvre dans une même installation pour réduire de manière drastique les risques de contamination.

Dans le processus de production, l'opération de remplissage du récipient est usuellement reconnue comme étant la plus sensible au regard des risques de contamination.

Les récipients introduits dans l'unité de remplissage ne sont toutefois que l'un des principaux vecteurs de contamination.

En effet, des agents pathogènes dès lors qu'ils sont présents dans l'environnement direct des récipients, depuis l'air jusqu'aux organes des unités de l'installation, sont notamment susceptibles de contaminer le volume intérieur du récipient.

C'est la raison pour laquelle, outre les traitements de stérilisation ou d'aseptisation visant directement le produit destiné à être introduit dans le récipient et le récipient lui-même, on procède également à une décontamination de l'unité de remplissage laquelle comporte une enceinte de confinement propre à l'isoler de l'atmosphère environnant et à délimiter une zone à stériliser, zone dans laquelle on procèdera au remplissage.

Une telle unité de remplissage est parfois appelée isolateur ce qui, par définition, désigne généralement toute enceinte permettant de procéder à des opérations sans risque de contamination.

Pour assurer la stérilisation de la deuxième zone de l'unité de remplissage, on procède notamment à une décontamination par voie chimique, en particulier par pulvérisation de solutions stérilisantes comme de l'hydroxyde de sodium (NaOH) ou du peroxyde d'hydrogène (H₂O₂).

La décontamination de la deuxième zone de l'unité de remplissage correspond à un mode de fonctionnement, dit de décontamination, de l'installation qui précède et/ou succède à la mise en oeuvre du mode de fonctionnement, dit de production, de l'installation.

Pour pouvoir procéder à la mise en oeuvre du mode de décontamination de l'unité de remplissage, il est nécessaire d'isoler l'unité de remplissage du reste de l'installation et tout particulièrement de l'unité de soufflage adjacente.

En effet, si les organes de l'unité de remplissage sont réalisés dans des matériaux appropriés, tels que de l'inox 316L, pour résister à l'agression chimique des solutions précitées qui sont utilisées pour la décontamination, cela n'est toutefois pas le cas de ceux de l'unité de soufflage et du dispositif de transfert attenant interposé entre ces unités.

Ainsi, les solutions utilisées pour la décontamination sont susceptibles de provoquer des agressions chimiques indésirables, notamment la corrosion d'organes du dispositif de transfert et de l'unité de soufflage, en particulier des moules.

Dans une telle installation, chaque unité comporte donc sa propre enceinte, respectivement une première enceinte de protection qui délimite une première zone à l'intérieur de laquelle est au moins agencée l'unité de soufflage de récipients et une deuxième enceinte de confinement qui délimite une deuxième zone stérile à l'intérieur de laquelle est au moins agencée une unité de remplissage des récipients fabriqués.

La deuxième enceinte est au moins en partie accolée à la première enceinte attenante par une partie commune d'interface dans laquelle est aménagée une ouverture destinée à permettre le transfert des récipients à travers lesdites enceintes, depuis l'unité de soufflage jusqu'à l'unité de remplissage, lorsque l'installation fonctionne en mode production.

Pour permettre d'isoler l'unité de remplissage lors du fonctionnement de l'installation en mode décontamination, l'installation comporte des moyens d'obturation sélective de ladite ouverture de communication entre les unités de soufflage et de remplissage qui est aménagée telle une fenêtre à travers une partie de leurs enceintes respectives.

Les moyens d'obturation de l'ouverture sont ainsi destinés à être déplacés sélectivement entre une position ouverte dans laquelle les moyens d'obturation autorisent ledit transfert des récipients à travers l'ouverture commune lorsque l'installation est en mode production, et une position fermée dans laquelle les moyens d'obturation interdisent tout transfert en isolant la deuxième enceinte, en particulier pour procéder aux opérations de traitement de l'unité de remplissage en mode décontamination.

Pour assurer le transfert des récipients entre l'unité de soufflage et l'unité de remplissage en mode production, l'installation comporte au moins un dispositif de transfert comportant au moins une roue de transfert.

Généralement implantée dans la première zone, la roue de transfert est adjacente à ladite ouverture et elle comporte au moins une partie s'étendant à travers l'ouverture pour assurer le transfert des récipients. Cette partie de la roue de transfert doit être préalablement démontée pour permettre la fermeture de l'ouverture par les moyens d'obturation associés.

L'opération de démontage puis de remontage d'au moins une partie de la roue de transfert nécessite l'intervention d'un opérateur qui doit pour ce faire franchir la première enceinte de protection, notamment pourvue à cet effet de portes, pour pénétrer dans une partie de la première zone, dite zone de transfert, dans laquelle se trouve ladite roue de transfert à laquelle il doit accéder pour réaliser lesdites opérations.

Or, l'opérateur exécutant de telles opérations de démontage puis de remontage constitue alors un vecteur potentiel important d'introduction d'agents pathogènes à l'intérieur de l'installation.

Les opérations de démontage et/ou de remontage sont donc des opérations particulièrement sensibles en ce qu'elles présentent des risques non négligeables de contamination des zones de travail protégées de l'installation, lesquels risques de contamination sont de différents ordres.

Tout d'abord, franchissant la première enceinte depuis l'extérieur de l'installation pour procéder au démontage d'au moins une partie de la roue de transfert, l'opérateur est susceptible d'introduire une première fois dans la première zone, plus précisément dans la zone de transfert, de tels agents pathogènes.

Ensuite, après la mise en oeuvre du mode de décontamination destiné à stériliser la deuxième zone de l'unité de remplissage, l'opérateur doit à nouveau franchir la première enceinte pour procéder au remontage d'au moins ladite partie démontée de la roue de transfert et ce faisant l'opérateur est alors susceptible d'introduire une seconde fois des agents pathogènes dans la prémière zone.

Les agents pathogènes, introduits la première comme la seconde fois par l'opérateur à l'intérieur de l'installation, peuvent dès lors contaminer immédiatement et/ou ultérieurement l'ensemble des organes des unités et donc les récipients qui y seront produits.

Les agents pathogènes ainsi introduits sont tout particulièrement susceptibles de venir contaminer, depuis la zone de transfert de la première partie, la deuxième zone stérile en y étant aéroportés par l'air circulant à l'intérieur des zones délimitées par les enceintes.

Par conséquent, il y a lieu d'observer que l'introduction de l'opérateur dans la première zone est d'une manière générale toujours préjudiciable au moins à l'unité de soufflage et cela qu'elle survienne la première fois pour le démontage et/ou la seconde fois pour le remontage.

En effet, une telle introduction d'agents pathogènes opérés simultanément à celle de l'opérateur est susceptible d'affecter l'ensemble des actions mises en oeuvre pour prévenir et réduire de manière drastique les risques de contamination comme cela été rappelé précédemment pour certaines d'entre elles.

Mais, une telle introduction est également et surtout susceptible d'affecter la stérilité de la deuxième zone de l'unité de remplissage qui encourt alors des risques de contamination multiples.

Un premier risque de contamination de l'unité de remplissage survient lors du démontage si l'opérateur a introduit des agents pathogènes car ces agents peuvent être immédiatement aéroportés par l'air en circulation tant que l'ouverture n'est pas obturée.

Cependant, on conviendra qu'une telle contamination n'apparaît pas critique dès lors que de tels agents seront détruits ultérieurement par le traitement de décontamination.

Un second risque de contamination de l'unité de remplissage survient lors de l'opération de remontage au cours de laquelle l'ouverture commune d'interface étant à nouveau ouverte, tout agent pathogène toujours introduit par l'opérateur est alors, de manière identique, susceptible d'affecter la stérilité de la deuxième zone de l'unité de remplissage et notamment des récipients qui y seront remplis ultérieurement en mode production.

Ainsi, les risques de contamination de l'unité de remplissage les plus critiques sont donc plus particulièrement, mais non exclusivement, ceux liés à l'opération de remontage dès lors qu'elle survient postérieurement à la décontamination de la deuxième zone.

Non exclusivement, car des agents pathogènes ayant été introduits par l'opérateur en zone de transfert de la première zone lors des opérations de démontage et/ou de remontage d'une partie de la roue peuvent également pénétrer ultérieurement, donc postérieurement au remontage, dans la deuxième zone stérile de l'unité de remplissage décontaminée.

Outre le risque de contamination effectif de la première zone, il existe alors en effet du simple fait de la présence de tels agents dans la première zone, un risque potentiel de contamination de la deuxième zone stérile.

En effet, ces agents pathogènes sont susceptibles de contaminer la deuxième zone stérile, soit qu'ils y soient aéroportés par l'air circulant à travers l'ouverture, soit également qu'ils y soient transportés par les récipients eux-mêmes qui, en mode production, circulent de la première vers la deuxième zone.

Le but de la présente invention est donc de perfectionner une telle installation, notamment pour réduire ou supprimer les risques de contamination précités.

Dans ce but, l'invention propose une installation selon la revendication 1.

Avantageusement, le déplacement de ladite partie mobile de la roue de transfert entre lesdites positions est commandé manuellement ou automatiquement à distance, depuis l'extérieur de la première enceinte et/ou la deuxième enceinte de l'installation.

Grâce à l'invention, on supprime les opérations de démontage et de remontage d'au moins une partie de la roue de transfert qui étaient auparavant nécessaires en raison du fait qu'en s'étendant à travers l'ouverture ladite partie de la roue en empêchait la fermeture par les moyens d'obturation. La fermeture de l'ouverture est notamment requise pour isoler la deuxième enceinte de la première lors de la décontamination.

Avantageusement, les opérations antérieures de montage/remontage dont découlait la présence de l'opérateur dans la zone de transfert de la première zone sont remplacées par des opérations simples et rapides qui permettent d'obtenir le pivotement de ladite au moins une partie de roue de transfert et la fermeture de l'ouverture depuis l'extérieur de l'installation.

Grâce à quoi, l'opérateur ne peut à aucun moment former un vecteur d'introduction d'agents pathogènes à l'intérieur du volume de l'installation délimité par les enceintes, de sorte que les risques de contamination précités sont supprimés.

En effet, la commande manuelle et/ou automatique du déplacement de la partie mobile de la roue de transfert entre lesdites positions est susceptible d'être réalisée à distance, c'est à dire sans qu'un opérateur n'ait à pénétrer physiquement à l'intérieur de l'installation et donc à franchir comme précédemment les portes de la première enceinte pour pénétrer dans la zone de transfert de la première zone afin d'y procéder aux opérations de montage/démontage auparavant nécessaires sur la roue de transfert.

Dans le cas d'une commande manuelle du déplacement de la partie de la roue de transfert, la présence d'un opérateur est alors requise mais l'opérateur procède toujours auxdites opérations depuis l'extérieur de l'installation, notamment sans jamais pénétrer dans la première zone de la première enceinte et cela quel que soit le mode de fonctionnement de l'installation en préparation.

De préférence, seule une partie d'au moins un des bras de l'opérateur franchit la première enceinte par l'intermédiaire d'un gant formant lesdits moyens de manipulation qui sont liés de manière étanche à l'enceinte de sorte que l'opérateur intervient à distance depuis l'extérieur en étant isolé des organes qu'il manipule à l'intérieur de l'installation ou de l'air les environnant.

Grâce à quoi et par comparaison avec l'art antérieur, l'opérateur n'est jamais en mesure de pouvoir constituer un vecteur d'introduction d'agents pathogènes à l'intérieur de l'installation.

Selon d'autres caractéristiques de l'invention :
- les moyens d'articulation sont constitués par un pivot déterminant un axe de pivotement autour duquel l'élément supérieur de bride pivote par rapport à l'élément inférieur de bride suivant un mouvement de giration correspondant à la course de la partie supérieure mobile de la roue entre lesdites positions de transfert et escamotée ;
- la roue de transfert comporte des moyens de verrouillage aptes à immobiliser la partie supérieure par rapport à la partie inférieure de la roue, respectivement dans la position de transfert ou la position escamotée ;
- les moyens de verrouillage de la roue sont constitués par au moins une goupille destinée à être sélectivement introduite dans un premier logement s'étendant à travers les éléments supérieur et inférieur de la bride dans lequel la goupille immobilise les parties supérieure et inférieure de roue dans une position déterminée correspondant la position de transfert ou introduite dans un deuxième logement s'étendant à travers les éléments supérieur et inférieur de la bride dans lequel la goupille immobilise les parties supérieure et inférieure de roue dans une autre position déterminée correspondant la position escamotée de la roue de transfert ;
- l'installation comporte des moyens de butée qui, aptes à coopérer avec une partie de l'élément supérieur de bride, détermine la position de la partie supérieure mobile de la roue dans ladite position escamotée, notamment de manière à faciliter l'introduction de la goupille de verrouillage dans le deuxième logement ;
- la roue de transfert comporte des moyens de blocage qui sont destinés à assurer sélectivement le blocage en rotation de la partie inférieure fixe de la roue par rapport aux moyens d'entraînement en rotation de la roue de transfert lorsque l'installation est en mode décontamination;
- les moyens de blocage en rotation sont constitués par au moins un doigt qui est reçu dans une encoche complémentaire que comporte l'élément inférieur de bride solidaire de la partie inférieure de la roue ;
- la première enceinte de protection comporte des moyens de manipulation, tels qu'au moins un gant relié de manière étanche à une ouverture réalisée dans la première enceinte, pour commander manuellement au moins le déplacement de la roue de transfert entre la position de transfert et la position escamotée depuis l'extérieur de la première enceinte de l'installation ;
- les moyens de manipulation à distance comportent au moins un gant prolongé par une manchette reliée de manière étanche à une ouverture réalisée dans la première enceinte, notamment dans l'une des portes de la première enceinte adjacente à la roue de transfert, de manière à permettre à un opérateur de procéder manuellement, depuis l'extérieur de la première enceinte, aux manipulations requises pour déplacer au moins ladite partie de la roue de transfert entre la position de transfert et la position escamotée grâce à quoi l'opérateur ne pénètre plus à l'intérieur de la première zone dans laquelle se trouvent la roue de transfert et l'unité de soufflage des récipients ;
- l'installation comporte au moins un actionneur pour commander automatiquement au moins le déplacement de la roue de transfert entre la position de transfert et la position escamotée depuis l'extérieur de la première enceinte de l'installation.

D'autres caractéristiques et avantages de l'invention apparaîtront à la lecture de la description qui va suivre pour la compréhension de laquelle on se reportera aux dessins annexés dans lesquels :

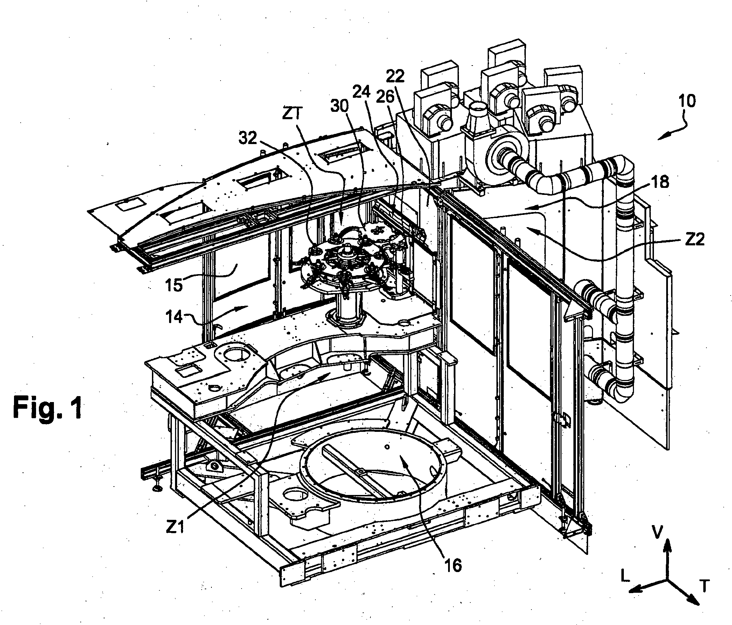

- la figure 1 est une vue de trois-quarts arrière qui représente partiellement en perspective un exemple de réalisation d'une installation de production de récipients selon l'invention et qui illustre plus particulièrement la partie commune de jonction entre les enceintes de l'unité de soufflage et de l'unité de remplissage dans laquelle est aménagée une ouverture pour le transfert des récipients ;

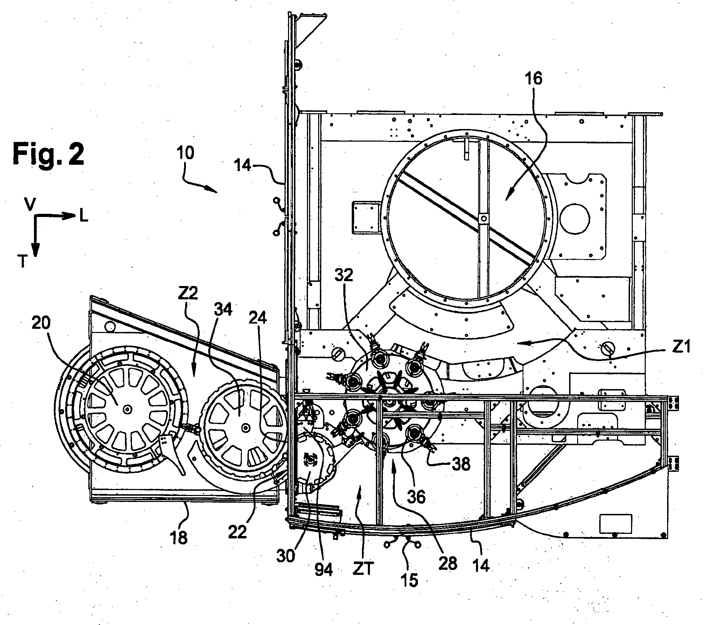

- la figure 2 est une vue de dessus qui représente l'installation selon la figure 1 et qui illustre la roue de transfert du dispositif de transfert qui, adjacente à l'ouverture, est en position de transfert ;

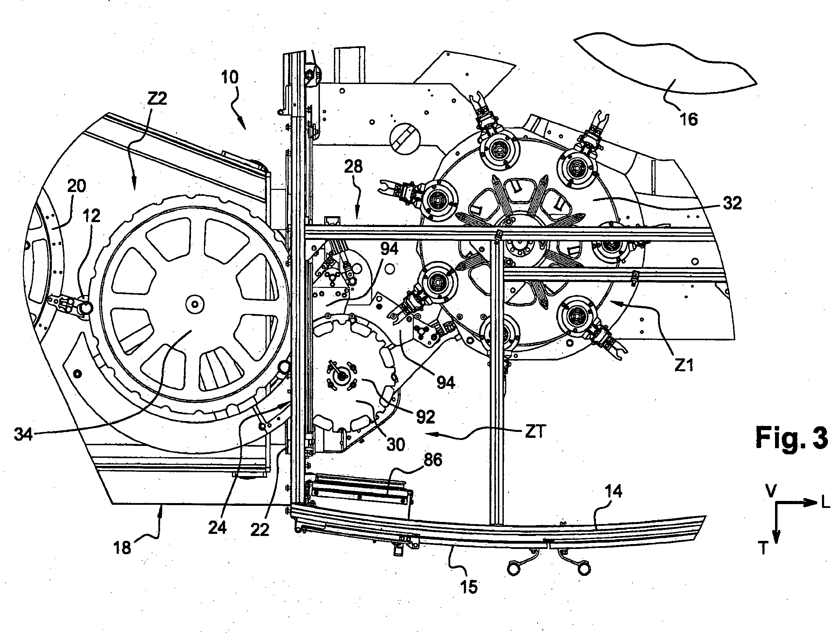

- la figure 3 est une vue de dessus qui représente plus en détail la figure 2 et qui illustre la partie commune entre les enceintes comportant l'ouverture qui, en mode production, n'est pas obturée par les moyens d'obturation associés se trouvant en position ouverte ;

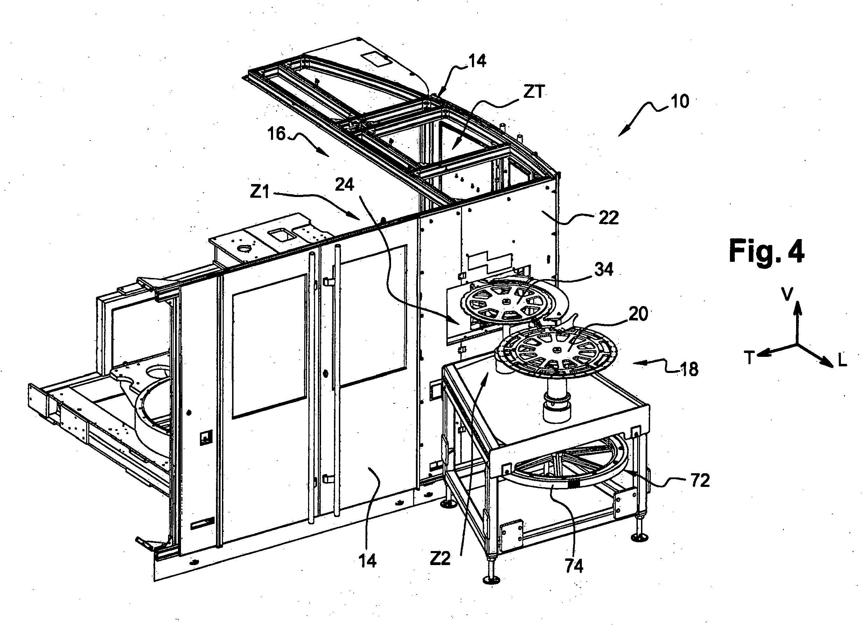

- la figure 4 est une vue de trois-quarts en perspective qui représente l'installation du côté de l'unité de remplissage sans la deuxième enceinte et qui illustre la deuxième roue de transfert qui est associée à l'unité de remplissage et reçoit (en mode fonctionnement) les récipients transmis à travers l'ouverture par la roue de transfert escamotable ;

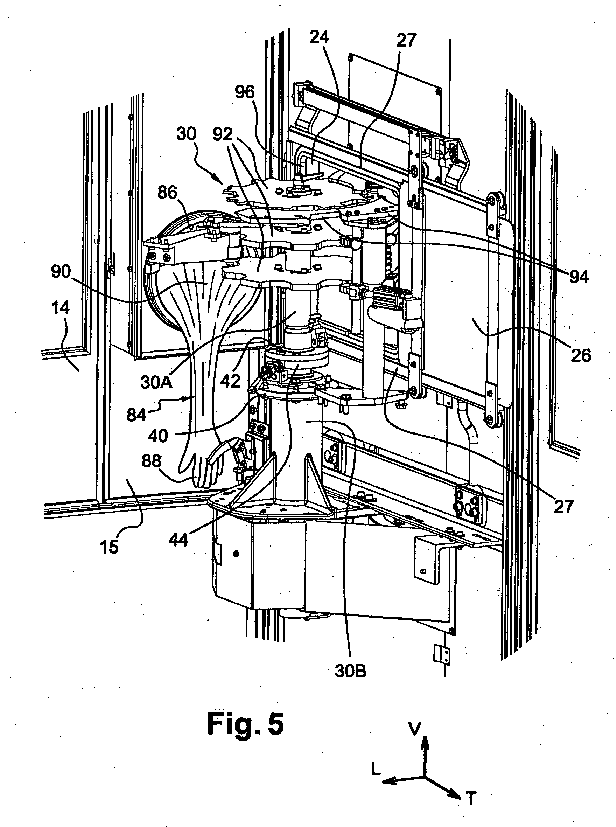

- la figure 5 est une vue de trois-quarts en perspective qui représente, depuis l'arrière, l'installation du côté de l'unité de soufflage et qui illustre, adjacente à l'ouverture et ses moyens d'obturation en position ouverte, la roue de transfert apte à être escamotée manuellement depuis l'extérieur de la première enceinte par l'intermédiaire de moyens de manipulation reliés de manière étanche à l'une des portes ;

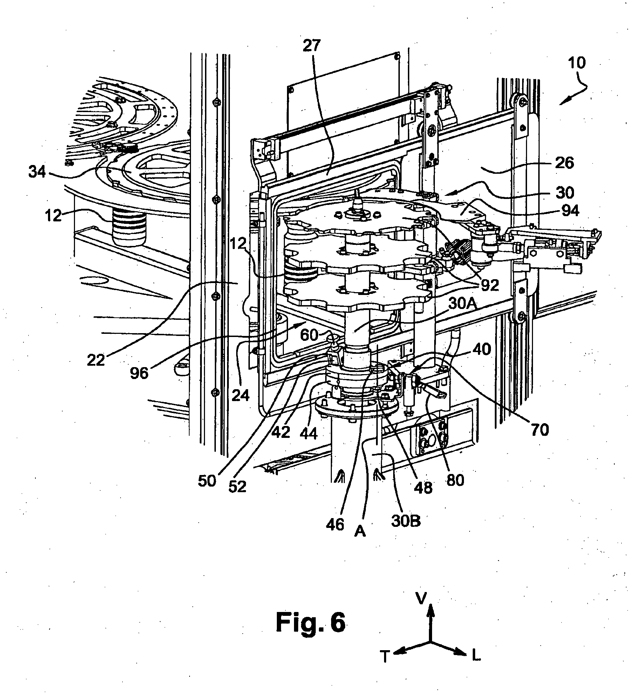

- la figure 6 est une vue de trois-quarts en perspective qui représente, depuis l'avant, l'installation du côté de l'unité de soufflage et qui illustre, adjacente à l'ouverture et ses moyens d'obturation en position ouverte et en l'absence des portes de la première enceinte, la roue de transfert munie d'une bride en deux parties montées pivotantes entre elles et destinées à permettre l'escamotage de la partie supérieure de la roue qui s'étend, en position de fonctionnement, à travers l'ouverture ;

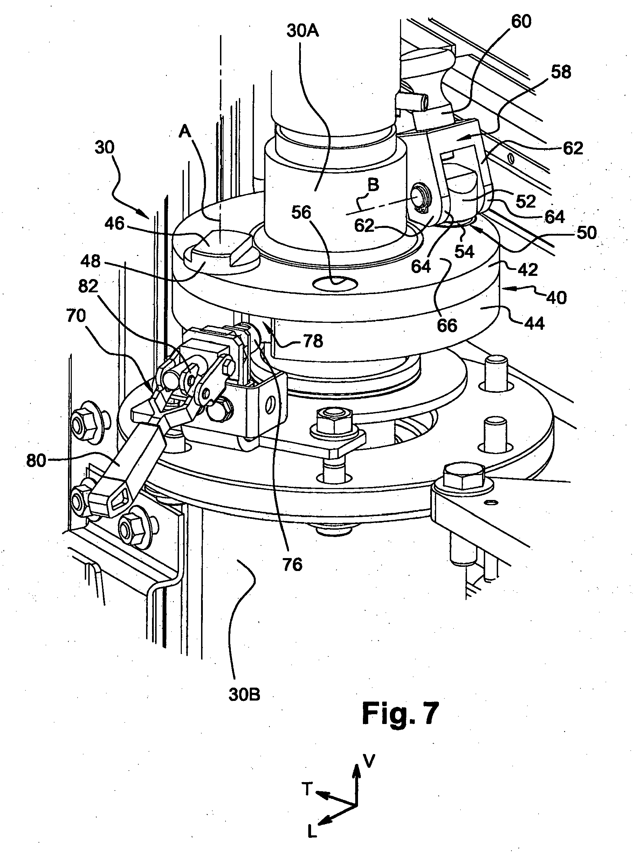

- la figure 7 est une vue en perspective qui représente en détail la bride de la roue de transfert dont les éléments supérieur et inférieur relient respectivement la partie supérieure mobile et la partie inférieure fixe, la roue de transfert étant dans la première position de transfert ;

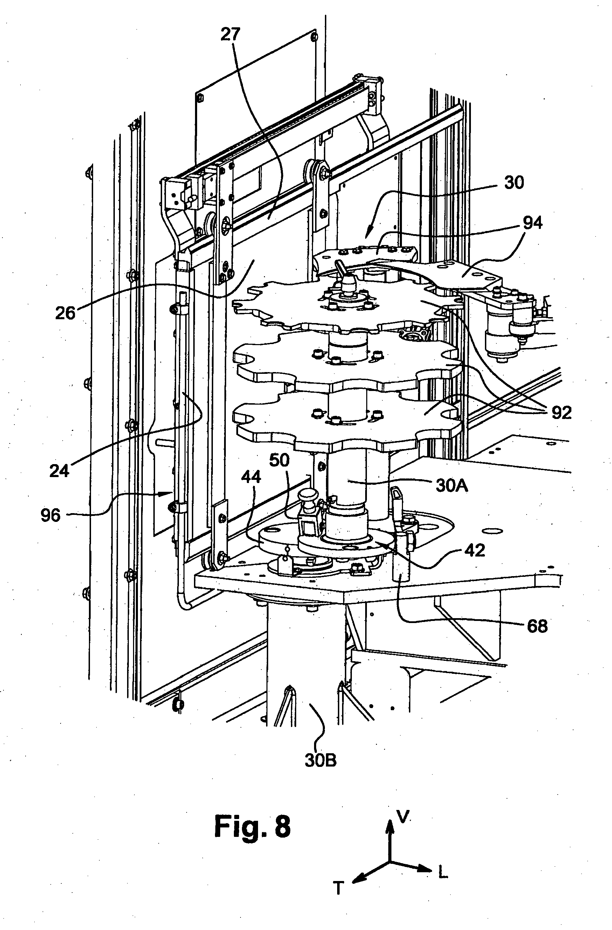

- la figure 8 est une vue en perspective qui représente, depuis l'avant de l'installation et en l'absence des portes de la première enceinte, la roue de transfert dans la deuxième position escamotée et l'ouverture close par les moyens d'obturation en position de fermeture ;

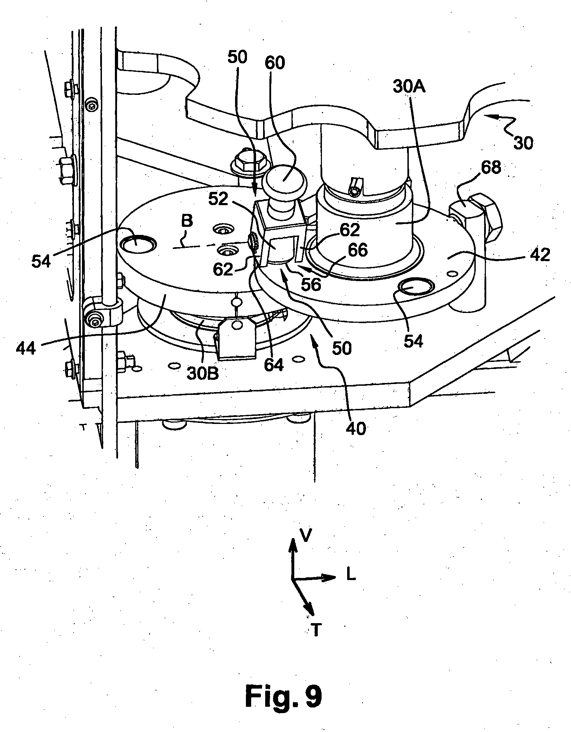

- la figure 9 est une vue en perspective qui représente en détail la bride de la roue de transfert en position escamotée et la goupille formant les moyens de verrouillage en position dans le deuxième logement pour assurer le verrouillage en position de l'élément supérieur de bride par rapport à l'élément inférieur de bride ;

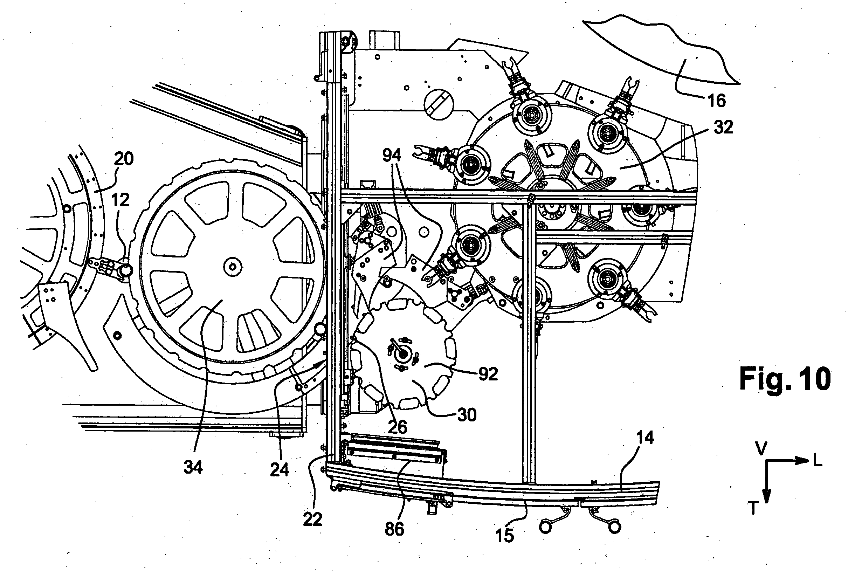

- la figure 10 est une vue de dessus qui, analogue à la figure 3, représente en détail la partie commune entre les enceintes des unités de soufflage et de remplissage comportant l'ouverture et qui illustre ladite ouverture close par les moyens d'obturation associés en position fermée.

Dans la suite de la description, des éléments similaires ou identiques seront désignés par les mêmes références.

Dans la description, on utilisera à titre non limitatif les expressions telles que "amont" et "aval", "supérieur" et "inférieur", "intérieur" et "extérieur", "avant" et "arrière" et les orientations longitudinale, verticale et transversale en référence aux trièdres (L, V, T) représentés sur les figures et aux définitions données dans la description.

On a représenté à la figure 1, un exemple de réalisation d'une installation 10 pour la production de récipients 12, notamment, mais non exclusivement, de bouteilles telles qu'illustrées partiellement sur la figure 6.

L'installation 10 comporte au moins une première enceinte 14 de protection qui délimite une première zone Z1 à l'intérieur de laquelle est agencée au moins une unité de soufflage 16 de récipients 12.

De préférence, l'unité de soufflage 16 est apte à fabriquer des récipients 12 par soufflage ou par étirage-soufflage à partir de préformes (non représentées) qui sont préalablement conditionnées thermiquement dans un four (non représenté), notamment par chauffage au moyen de lampes à rayonnements infrarouges.

De manière connue, une telle unité de soufflage 16 comporte en effet en amont un four de chauffage pour le conditionnement thermique des préformes, ainsi que des moyens de transfert (non représentés) agencés en sortie qui sont aptes à amener chacune desdites préformes chauffées dans un des moules (non représentés) que comporte à sa périphérie un carrousel (non représenté) afin d'y procéder à sa transformation en récipient 12 par soufflage ou encore par étirage-soufflage selon les applications.

L'installation 10 comporte une deuxième enceinte 18 de confinement qui, au moins en partie accolée à la première enceinte 14 attenante par une partie commune 22, délimite une deuxième zone Z2 stérile (voir figure 2), à l'intérieur de laquelle est agencée au moins une unité de remplissage 20 des récipients 12 fabriqués par l'unité de soufflage 16.

Chacune des enceintes 14 et 18 est constituée d'un ensemble de parois verticales qui, notamment assemblées entre elles pour former globalement un parallélépipède, sont respectivement fermées au dessus et en dessous, par exemple par une paroi formant plafond et par le sol respectivement.

De préférence, au moins une des parois verticales des enceintes 14 et 18 comporte des portes afin de permettre leur franchissement, notamment par un opérateur, et l'accès à l'intérieur de l'installation 10.

La première enceinte 14 comporte par exemple au moins deux portes 15 d'accès formant une partie de sa paroi verticale avant et qui sont plus particulièrement visibles sur les figures 1 et 3.

Comme cela est plus particulièrement illustré aux figures 3 à 5, l'installation 10 comporte au moins une ouverture 24 qui est réalisée dans ladite partie commune 22 des première et deuxième enceintes 14 et 18.

L'ouverture 24 est destinée à permettre le transfert des récipients 12 de l'unité de soufflage 16 à l'unité de remplissage 20.

Avantageusement, l'installation 10 comporte des moyens d'obturation 26 de ladite ouverture 24 qui sont aptes à être déplacés sélectivement entre au moins une position ouverte et une position fermée.

La position ouverte correspond à la position dans laquelle les moyens d'obturation 26 autorisent le transfert des récipients 12 à travers l'ouverture 24 commune lorsque l'installation 10 est dans un mode de fonctionnement, dit de production.

La position fermée correspond à la position dans laquelle les moyens d'obturation 26 interdisent tout transfert en isolant la deuxième enceinte 18.

La position fermée est en particulier destinée à permettre de procéder au moins dans la deuxième enceinte 18 à des opérations de décontamination de l'unité de remplissage 20, lorsque l'installation 10 est dans un autre mode de fonctionnement, dit de décontamination.

De préférence, l'installation 10 comporte au moins un actionneur destiné à commander le déplacement des moyens d'obturation 26 de l'ouverture 24 commune qui coulissent entre la position ouverte correspondant au mode production et la position fermée correspondant au mode décontamination.

Avantageusement, les moyens d'obturation 26 assurent dans ladite position fermée une fermeture hermétique de l'ouverture 24 propre à isoler la deuxième enceinte 18 comportant l'unité de remplissage 20 de la première enceinte 14 comportant l'unité de soufflage 16 des récipients 12.

Avantageusement, les moyens d'obturation de l'ouverture 24 sont constitués par un volet 26 qui est monté coulissant entre lesdites positions ouverte et fermée par l'intermédiaire de deux glissières 27, respectivement une glissière supérieure et une glissière inférieure.

Comme illustré par exemple par la figure 5, les glissières 27 du volet 26 sont solidaires de la partie commune 22 et sont agencées respectivement au dessus et au dessous de l'ouverture 24 qui présente ici une forme globalement rectangulaire.

Les opérations de décontamination sont de préférence réalisées par voie chimique en pulvérisant des solutions décontaminantes, telles que de l'hydroxyde de sodium (NaOH) ou du peroxyde d'hydrogène (H₂O₂), à l'intérieur de la deuxième enceinte 18.

L'installation 10 comporte un dispositif de transfert 28 pour assurer le transfert des récipients 12 entre l'unité de soufflage 16 et l'unité de remplissage 20.

Le dispositif de transfert 28 comporte au moins une roue de transfert 30 qui est adjacente à l'ouverture 24 aménagée dans la partie commune 22 et qui est destinée à transférer, en mode production, les récipients 12 à travers ladite ouverture 24.

De préférence, le dispositif de transfert 28 comporte en plus de la roue de transfert 30, deux autres roues de transfert 32 et 34, respectivement agencées en amont et en aval de la roue 30 comme illustré sur la figure 2.

Les roues 30, 32 et 34 du dispositif de transfert 28 sont agencées les unes par rapport aux autres de manière à présenter chacune une portion en arc de cercle tangente à la portion de la roue adjacente afin de déterminer une zone dans laquelle s'opère le transfert des récipients 12 de l'une à l'autre.

La première roue de transfert 32 est agencée entre l'entrée de la roue de transfert 30 et une zone de sortie du carrousel de l'unité de soufflage 16 dans laquelle les moules sont commandés en ouverture pour permettre l'extraction des récipient fabriqués grâce aux moyens de soufflage ou d'étirage-soufflage associés.

La première roue de transfert 32 est destinée à assurer l'extraction des récipients 12 fabriqués hors des moules et leur transfert vers l'aval, par exemple par l'intermédiaire de bras de transfert 36 munis à leur extrémité libre de moyens de préhension 38, tels que des pinces.

La deuxième roue de transfert 34 est agencée, en aval, entre la sortie de la roue de transfert 30 et un autre carrousel que comporte l'unité de remplissage 20, les postes de remplissage des récipients 12 étant répartis circonférentiellement de manière régulière autour dudit carrousel.

Comme cela a été explicité précédemment, le but de la présente invention est de proposer, pour une telle installation 10, une solution qui soit notamment à même de supprimer les risques de contamination associés à l'intervention de l'opérateur.

Pour ce faire, l'invention propose de modifier l'installation afin de supprimer toute présence physique de l'opérateur à l'intérieur de l'installation, soit ici dans la zone de transfert de la première zone Z1 de la première enceinte 14, et ce faisant de supprimer corollairement les risques de contamination associés.

Avantageusement, au moins une partie de la roue de transfert 30 est donc montée mobile entre au moins :
- une première position de transfert dans laquelle ladite au moins une partie de la roue 30 s'étend à travers l'ouverture 24 commune pour assurer le transfert des récipients 12 lors du fonctionnement de l'installation 10 en mode production, et
- une deuxième position escamotée dans laquelle ladite au moins une partie de la roue 30 est déplacée pour permettre la fermeture de l'ouverture 24 commune par les moyens d'obturation 26 associés en vue du fonctionnement de l'installation en mode décontamination.

Selon une caractéristique importante de l'invention, le déplacement de la partie mobile de la roue de transfert 30, respectivement entre lesdites position de transfert et escamotée, est apte à être commandé depuis l'extérieur de l'installation 10, plus précisément ici depuis l'extérieur de la première enceinte 14 à l'intérieur de laquelle est agencée la roue de transfert 30.

L'escamotage de la partie de la roue 30 est par conséquent obtenu sans qu'un opérateur n'ait à ouvrir les portes 15 pour franchir la première enceinte 14 et à pénétrer physiquement dans la zone de transfert ZT pour intervenir sur la roue de transfert 30 de sorte que les risques de contamination précités sont avantageusement totalement supprimés.

De préférence, la commande du déplacement de la roue de transfert 30 vers sa position escamotée en vue de libérer l'ouverture 24 est réalisée manuellement par un opérateur depuis l'extérieur de l'installation 10.

A défaut d'automatisation totale, l'intervention de l'opérateur reste donc requise pour au moins effectuer les opérations d'escamotage d'au moins la partie de la roue de transfert 30 montée mobile puis, la décontamination de l'unité de remplissage 20 effectuée, les opérations inverses propres à replacer ladite partie dans sa position initiale de transfert en vue du fonctionnement de l'installation 10 en mode production.

La roue de transfert 30 comporte une bride 40 comportant respectivement un élément supérieur 42 et un élément inférieur 44 de bride qui sont respectivement solidaires d'une partie supérieure 30A et d'une partie inférieure 30B de la roue.

Avantageusement, les éléments de bride 42, 44 sont au moins reliés entre eux par des moyens d'articulation 46, tels qu'illustrés notamment sur la figure 7.

Les moyens d'articulation 46 sont en particulier aptes à permettre le déplacement de la partie supérieure 30A de la roue qui, en position de transfert, est la seule partie de la roue de transfert 30 à s'étendre à travers l'ouverture 24.

Ainsi, ladite partie supérieure 30A forme grâce à la bride 40 une partie mobile par rapport à la partie inférieure 30B de roue qui constitue quand à elle ici une partie fixe.

La partie supérieure 30A de la roue de transfert 30 constitue donc ladite au moins une partie de roue qui est montée mobile entre la position de transfert et la position escamotée.

De préférence, les moyens d'articulation 46 sont constitués par un pivot 48 déterminant un axe de pivotement A autour duquel l'élément supérieur 42 de bride pivote par rapport à l'élément inférieur 44 de bride suivant un mouvement de giration correspondant à la course de la partie supérieure 30A mobile de la roue entre lesdites positions de transfert et escamotée.

L'axe de pivotement A formé par le pivot 48 s'étend verticalement et coaxialement à l'axe principal de rotation de la roue 30.

Les axes des parties supérieure et inférieure 30A et 30B sont, en position de transfert, confondus et déterminent globalement l'axe principal de rotation de la roue 30 ce qui n'est plus le cas en position escamotée dans laquelle la partie supérieure 30A est désaxée par rapport à la partie fixe inférieure 30B.

Avantageusement, la roue de transfert 30 comporte des moyens de verrouillage 50 aptes à immobiliser, respectivement dans la position de transfert ou la position escamotée, la partie supérieure 30A par rapport à la partie inférieure 30B de la roue.

De préférence, les moyens de verrouillage 50 de la roue 30 sont constitués par au moins une goupille 52 destinée à être sélectivement introduite dans au moins un premier logement 54 qui, comportant deux parties, s'étend verticalement à travers les éléments supérieur et inférieur 42 et 44 de la bride 40.

Lorsque la goupille 52 est insérée verticalement dans le premier logement 54, la goupille 52 immobilise alors les parties supérieure 30A et inférieure 30B de la roue de transfert 30 dans une position déterminée qui correspond à ladite position de transfert de la roue 30.

De préférence, les moyens de verrouillage 50 de la roue 30 constitués par la goupille 52 sont encore aptes à être sélectivement introduits dans au moins un deuxième logement 56 dans lequel la goupille 52 immobilise les parties supérieure 30A et inférieure 30B de la roue 30 dans une position déterminée qui correspond à ladite position escamotée de la roue 30.

Le deuxième logement 56 est également réalisé en deux parties qui s'étendent verticalement à travers les éléments supérieur 42 et inférieur 44 de la bride 40.

Ainsi, la bride 40 comporte respectivement le premier logement 54 et le deuxième logement 56 qui sont réalisés, par exemple par perçage, à travers les éléments supérieur 42 et inférieur 44 de la bride 40.

Avantageusement, les moyens de verrouillage 50 formés par la goupille 52 comportent une extrémité inférieure de verrouillage destinée à être introduite dans le premier logement 54 ou le deuxième logement 56 et une autre extrémité supérieure qui est reliée à un organe de manoeuvre 58.

L'organe de manoeuvre 58 de la goupille 52 de verrouillage comporte par exemple une poignée 60 qui est montée articulée selon un axe de rotation B qui est orthogonal à l'axe principal de la goupille 52 d'orientation verticale lorsqu'elle est en position de verrouillage dans l'un des logements 54 ou 56.

La poignée 60 formant l'organe de manoeuvre 58 comporte, pour sa liaison articulée avec la goupille 52, deux ailes 62 qui s'étendent de part et d'autre de l'extrémité supérieure de la goupille 52 et qui comportent chacune un bord inférieur 64.

Le bord inférieur 64 de chaque aile 62 présente un profil qui est destinée à coopérer avec une partie en vis-à-vis de la face supérieure horizontale 66 de l'élément supérieur 42 de la bride 40.

La coopération de formes entre le bord 64 de chaque aile 62 et la face 66 de l'élément supérieur 42 de bride facilite avantageusement, lors des opérations en vue du déplacement de la roue de transfert 30, l'extraction de la goupille 52 hors du logement 54 ou 56 qui s'effectue avec l'assistance d'un effet de levier.

Ainsi, la poignée 60 conduit également à faciliter, pour l'opérateur intervenant depuis l'extérieur de l'installation 10, les manoeuvres de la goupille 52 de verrouillage entre les premier et deuxième logements 54 et 56.

De préférence, l'installation 10 comporte des moyens de butée 68 qui, coopérant avec une partie de l'élément supérieur 42 de bride, déterminent la position de la partie supérieure mobile 30A lorsque la roue 30 occupe ladite position escamotée.

Avantageusement, les moyens de butée 68 sont réglables par l'intermédiaire d'un système vis/écrou afin d'en ajuster précisément la position.

En effet, les moyens de butée 68 garantissent également le bon alignement vertical des deux parties du perçage formant le deuxième logement 56 de sorte que les moyens 68 facilitent également l'introduction de la goupille 52 de verrouillage dans le deuxième logement 56 correspondant au verrouillage de la position escamotée de la roue de transfert 30 comme illustré par la figure 9.

De préférence, la roue de transfert 30 comporte des moyens de blocage 70 qui sont destinés à assurer sélectivement le blocage en rotation de la partie inférieure 44 de la roue 30 par rapport aux moyens 72 d'entraînement en rotation de la roue de transfert 30 lorsque l'installation est en mode production.

Les moyens d'entraînement 72 de la roue de transfert 30 sont par exemple constitués par les moyens d'entraînement en rotation d'au moins la roue de l'unité de remplissage 20 de manière à assurer un entraînement synchrone et comportent pour ce faire au moins un moteur et des moyens de transmission de mouvement tels que des courroies.

De préférence, les moyens d'entraînement 72 sont agencés en partie inférieure de l'installation 10, la roue de transfert 30 comportant un arbre d'entraînement en rotation qui, formant pour l'essentiel la partie inférieure 30B, est relié par une courroie (non représentée) à une roue d'entraînement 74 que comporte l'unité de remplissage 20 (voir figure 4).

Les moyens 70 de blocage en rotation sont par exemple constitués par au moins un doigt 76 qui est reçu dans une encoche 78 complémentaire que comporte l'élément inférieur 44 de bride solidaire de la partie inférieure 30B de la roue.

Avantageusement, les moyens de blocage 70 sont montés mobiles entre au moins une position active dans laquelle le doigt 76 pénètre dans l'encoche 78 afin d'assurer le blocage en rotation et une position passive dans laquelle le doigt 76 s'étend en retrait, hors de l'encoche 78.

De préférence, le doigt 76 est monté mobile suivant un mouvement rectiligne d'avance ou de recul entre lesdites positions active et passive.

Avantageusement, le coulissement du doigt 76 est commandé par l'intermédiaire d'une poignée 80 reliée au doigt 76 par des moyens de liaison 82 propres à assurer la transmission des efforts appliqués sur la poignée 80 pour déplacer le doigt 76 entre lesdites positions.

Dans l'exemple de réalisation, la poignée 80 est montée mobile en rotation entre une position basse (figure 7) correspondant à la position passive des moyens de blocage 70 et une position haute correspondant à la position active.

L'actionnement de la poignée 80 entre lesdites positions haute et basse provoque ainsi, grâce aux moyens de liaison 82, le déplacement du doigt 76 dans ou hors de l'encoche 78 de manière que le blocage par insertion du doigt 76 dans l'encoche 78 est obtenu en relevant la poignée depuis sa position basse vers sa position haute et, inversement, le déblocage en abaissant la poignée 80 de sa position haute vers sa position basse.

Les moyens de blocage 70 permettent d'annuler le couple résiduel provoqué par les moyens d'entraînement 72 qui restent toutefois en mesure d'entraîner en rotation à faible vitesse la roue de l'unité de remplissage 20 lors du fonctionnement en mode décontamination.

Avantageusement, la première enceinte 14 de protection l'installation 10 comporte des moyens de manipulation 84 aptes à permettre des manipulations à distance par un opérateur et sans contact direct de l'opérateur avec les organes manipulés desquels l'opérateur qui, intervient depuis l'extérieur de la première enceinte 14, est isolé par lesdits moyens de manipulation 84.

De préférence, les moyens de manipulation 84 sont constitués par au moins un gant 88 prolongé par une manchette 90 illustré en détail à la figure 5.

Avantageusement, l'une des portes 15 de la première enceinte 14 comporte une ouverture 86 sur laquelle est montée de manière étanche l'extrémité de la manchette 90 située à l'opposé de celle où se trouve le gant 88 de manipulation.

Les moyens de manipulation 84 sont donc avantageusement intégrés dans une portion de paroi avant de l'enceinte 14 proche de la roue de transfert 30 de manière à permettre à un opérateur de procéder manuellement, depuis l'extérieur de la première enceinte 14 de protection, aux manipulations requises pour déplacer la roue de transfert 30 entre la position de transfert et la position escamotée.

Avantageusement, l'opérateur intervient à distance depuis l'extérieur sans jamais pénétrer à l'intérieur de la première zone Z1 dans laquelle se trouvent la roue de transfert 30 et l'unité de soufflage 16 des récipients 12, en particulier pas dans la zone de transfert ZT de ladite première zone Z1 dans laquelle est agencée la roue de transfert 30 et est directement adjacente à l'ouverture 24.

De préférence, seule une partie d'au moins l'un de ses bras franchit la première enceinte 14 par l'intermédiaire du gant 88-90 formant les moyens 84 de manipulation et grâce auquel l'opérateur intervient à distance sans jamais pouvoir constituer un vecteur d'introduction d'agents pathogènes.

En effet, bien qu'au moins un bras de l'opérateur "franchisse" l'enceinte 14, le fait que ledit au moins un gant 88 de manipulation soit relié de manière étanche à la porte 15 de la première enceinte 14 a pour conséquence que les manipulations s'effectuent sans contact physique direct avec l'opérateur du fait de l'interposition du gant 88 qui l'isole.

En l'absence de tout contact avec l'opérateur, par exemple de sa peau avec les éléments manipulés ou tout simplement de son corps avec l'air se trouvant à l'intérieur de la première zone Z1, l'opérateur totalement isolé n'est ainsi plus susceptible d'être un vecteur à même d'introduire des agents pathogènes à l'intérieur de l'installation 10 et tout particulièrement d'introduire directement ou indirectement des agents pathogènes à l'intérieur de la deuxième zone stérile Z2 de l'unité de remplissage 20.

Avantageusement, les moyens de verrouillage 50 ou encore les moyens de blocage 70 sont aisément manoeuvrés manuellement par l'opérateur par l'intermédiaire du gant 88-90 formant les moyens de manipulation 84 à distance, et cela à travers la première enceinte 14 sans aucun risque de contamination.

Grâce à l'invention, les opérations de démontage des moyens 92 de maintien des récipients 12 lors du transfert par la roue de transfert 30 qui étaient auparavant nécessaires sont supprimées, lesdits moyens 92 étant - dans l'exemple représenté sur les figures - constitués par les trois plateaux superposés qui sont pourvus chacun circonférentiellement d'encoches destinées à coopérer de manière connue avec une partie du récipient 12.

De préférence, de tels moyens de maintien 92 sont associés à des premiers moyens de guidage 94 qui, lorsqu'ils s'étendent à travers l'ouverture 24 en mode production, sont également montés mobiles entre deux positions l'une de travail, l'autre escamotée.

De préférence, l'escamotage des premiers moyens de guidage 94 des récipients lors du transfert de la roue 30 à la roue 34 est commandé automatiquement par l'intermédiaire d'au moins un actionneur, tel qu'un vérin.

L'installation 10 comporte encore des seconds moyens de guidage 94 qui sont agencés entre la première roue de transfert 32 et la roue de transfert 30, lesdits seconds moyens de guidage 94 sont également montés mobiles entre une position de travail et une position escamotée.

De préférence, les seconds moyens de guidage 94 sont escamotés automatiquement par l'intermédiaire d'au moins un actionneur de manière à ne pas interférer avec l'escamotage de la roue de transfert 30.

Avantageusement, les opérations à effectuer par l'opérateur pour procéder à la fermeture de l'ouverture 24 par le volet 26 sont donc particulièrement simplifiées dès lors qu'elles consistent principalement à faire pivoter la partie supérieure mobile 30A de la roue de transfert 30 puis à replacer les moyens de verrouillage 50 ou encore à actionner les moyens de blocage 70.

Outre la suppression des risques de contamination par l'opérateur, l'invention permet également dans une installation 10 équipée d'une telle roue de transfert 30 de procéder rapidement à la fermeture de l'ouverture 24 destinée à isoler hermétiquement l'unité de remplissage 20 et donc à un temps d'intervention réduit avant la mise en oeuvre du mode décontamination.

Dans le cas de l'exemple de réalisation précédent pour lequel l'escamotage est commandé manuellement par un opérateur, on décrira maintenant les différentes opérations successives réalisées respectivement pour passer en mode de décontamination après un fonctionnement en mode de production, puis les opérations inverses pour la reprise du fonctionnement de l'installation 10 en mode production.

Tel qu'illustré sur les figures 1 à 7, l'installation 10 est apte à fonctionner en mode production dans lequel l'unité de soufflage 16 transforme des préformes préalablement conditionnées thermiquement par soufflage ou par étirage soufflage en autant de récipients 12 qui sont successivement transférés par les roues 30, 32 et 34 du dispositif de transfert 28 jusqu'à l'unité de remplissage 20 où les récipients 12 sont remplis et avantageusement bouchés.

En mode production, la roue de transfert 30 occupe sa position de transfert dans laquelle les moyens 92 de maintien des récipients 12 que comporte la partie supérieure 30A de la roue 30 s'étendent horizontalement à travers l'ouverture 24 comprise ici dans un plan vertical d'orientation transversale.

Les moyens d'obturation 26 formés par le volet occupent leur position ouverte de sorte que le transfert des récipients 12 par les moyens 92 de la roue de transfert 30 puisse être mis en oeuvre.

Lorsque l'on souhaite procéder au changement du mode de fonctionnement pour mettre en oeuvre le mode de décontamination de l'unité de remplissage 20, on arrête alors l'installation 10 pour que cesse la production des récipients 12.

L'opérateur intervient alors pour réaliser les différentes opérations préalables à la mise en oeuvre du mode décontamination.

L'opérateur doit en effet procéder à l'escamotage d'au moins la partie 30A de la roue de transfert 30 et à la fermeture de l'ouverture 24 par le volet 26, l'ensemble de ces opérations ou manoeuvres étant toutes effectuées depuis l'extérieur de la première enceinte 14 sans que l'opérateur n'ait à franchir ladite enceinte 14.

L'opérateur procède tout d'abord au débrayage de l'entraînement en rotation de la roue de transfert 30 par les moyens 72 de manière que la roue soit libre de tourner sur elle-même, le débrayage est par exemple obtenu depuis l'extérieur à partir d'un pupitre de commande par l'intermédiaire de moyens commandant automatiquement un embrayage pneumatique.

L'opérateur procède alors au blocage en rotation de l'élément inférieur 44 de bride par les moyens de blocage 70.

Pour ce faire, l'opérateur passe au moins l'une de ses mains à travers l'ouverture 86 de la porte 15 de la première enceinte 14 afin de l'introduire dans les moyens 84 de manipulation à distance formés ici par au moins un gant 88 que prolonge la manchette 90 reliée de manière étanche à l'ouverture 86.

L'opérateur se tient alors debout à l'extérieur de l'installation 10, plus précisément devant la porte 15 comportant l'ouverture 86, et l'opérateur est à même d'actionner manuellement la poignée 80 des moyens de blocage 70 en relevant ladite poignée 80 vers sa position haute afin de provoquer simultanément le déplacement du doigt 76 de sa position passive vers sa position active dans laquelle le doigt 76 est introduit dans l'encoche 78 de l'élément inférieur 44 de la bride 40.

L'opérateur saisit ensuite la poignée 60 des moyens de verrouillage 50 qui est basculée afin de provoquer l'extraction de la goupille 52 hors du premier logement 54 qui s'étend verticalement à travers l'élément supérieur 42 et l'élément inférieur 44 de la bride 40.

De préférence, la goupille 52 est alors immédiatement introduite dans la partie supérieure du second logement 56 que comporte l'élément supérieur 42 de la bride 40.

En variante, des moyens d'attache, tels qu'une chaîne, sont prévus pour attacher les moyens de verrouillage 50 à une partie de la roue 30 ou de la bride 40 afin qu'ils ne puissent être perdus ou ne chutent lors des manipulations et que l'opérateur soit toujours à même de s'en saisir avec le gant 88.

L'élément supérieur 42 et l'élément inférieur 44 de la bride ne sont alors plus verrouillés ensemble et sont reliés uniquement par le pivot 48 qui forme les moyens d'articulation 46.

L'opérateur est alors à même de déplacer la partie supérieure 30A formant ladite partie mobile de la roue pour lui faire effectuer, suivant un mouvement de giration autour de l'axe vertical de pivotement A, le déplacement depuis la position de transfert illustrée aux figures 6 et 7 jusqu'à la position escamotée illustrée aux figures 8 et 9.

L'opérateur est notamment averti que la partie supérieure 30A de la roue de transfert 30 a atteint ladite position escamotée lorsque, l'élément supérieur 42 de la bride 40 entrant en contact avec des moyens de butée 68 prévus à cet effet, un effort de résistance lui est opposé.

La partie supérieure 30A mobile de la roue de transfert 30 occupant ladite position escamotée, l'opérateur peut procéder au verrouillage de la bride 40 de la roue 30 en introduisant la goupille 52 des moyens de verrouillage 50 dans le second logement 56 comme cela est illustré à la figure 9.

Avantageusement, les moyens de butée 68 sont réglables de manière à permettre pour chaque installation 10 et roue de transfert 30 un réglage précis qui, garantissant le bon positionnement en position escamotée, assure un parfait alignement vertical des deux perçages qui, réalisés respectivement dans les éléments supérieur 42 et inférieur 44, forment ensemble le second logement 56.

Sur la figure 9, la goupille 52 est en position de verrouillage dans le second logement 56 et on aperçoit respectivement dans l'élément supérieur 42 et dans l'élément inférieur 44 les deux parties qui, formant le premier logement 54, sont décalées angulairement l'une par rapport à l'autre.

L'opérateur procède également à l'escamotage des premiers et seconds moyens 94 de guidage des récipients 12 associés aux moyens de maintien 92, l'escamotage étant avantageusement obtenu automatiquement au moyen d'actionneurs qui sont commandés depuis l'extérieur de l'installation 10 par l'opérateur.

La partie supérieure 30A de la roue de transfert 30 et les moyens de guidage 94 étant respectivement en position escamotée, l'ouverture 24 est alors libre d'être obturée de manière étanche par le volet 26 afin de procéder à la décontamination de l'unité de remplissage 20.

Pour achever les opérations, l'opérateur commande par exemple depuis un pupitre, la fermeture automatique du volet 26 qui est avantageusement déplacé transversalement vers l'avant par des actionneurs depuis sa position d'ouverture jusqu'à sa position de fermeture de l'ouverture 24.

Avantageusement, l'installation 10 comporte autour de l'ouverture 24 des moyens d'étanchéité 96 pour parfaire l'obturation de l'ouverture 24 et garantir une fermeture étanche.

En position fermée du volet 26, les moyens d'étanchéité 96 sont interposés entre les bords de l'ouverture 24 aménagée dans la paroi 22 et le pourtour du volet 26.

Avantageusement, les moyens d'étanchéité 96 sont constitués par un ou des joints aptes à être gonflés pour assurer une fermeture hermétique de l'ouverture 24.

A l'issue de la mise en oeuvre du mode de décontamination, l'opérateur procède en ordre inverse aux mêmes manipulations et commandes qui viennent d'être décrites afin de repositionner l'ensemble des organes dans la position initiale qu'ils occupaient auparavant et qui correspond au fonctionnement en mode production de l'installation 10.

Selon une variante de réalisation non représentée, l'installation 10 comporte au moins un actionneur apte à être commandé à distance pour procéder automatiquement au moins au déplacement de la partie supérieure 30A formant la partie de la roue de transfert 30 qui est montée mobile entre la position de transfert et la position escamotée respectivement.

Bien entendu par comparaison avec l'exemple de réalisation décrit précédemment, l'ensemble des manoeuvres effectuées manuellement par un opérateur sont susceptibles d'être automatisées, notamment au moyen d'actionneurs appropriés.

Les moyens de verrouillage 50 sont par exemple avantageusement intégrés à un actionneur commandant le pivotement des éléments supérieur 42 et inférieur 44 de bride, lequel actionneur est commandé sélectivement pour obtenir l'escamotage de la partie supérieure mobile 30A de la roue de transfert 30.

Une telle commande sélective du ou des actionneurs est soit entièrement automatisée, soit contrôlée par un opérateur par l'intermédiaire de moyens d'interface homme/machine tels qu'un pupitre de commande disposé à l'extérieur de l'installation 10.

De la même manière, la poignée 80 de commande des moyens 70 de blocage en rotation est par exemple susceptible d'être remplacée par un actionneur apte à commander sélectivement le déplacement du doigt 76 par rapport à l'encoche 78.

Ainsi, l'invention n'est nullement limitée à l'exemple de réalisation décrit et représenté dans lequel les opérations sont effectuées manuellement par un opérateur.

Avantageusement, l'invention est susceptible d'être mise en oeuvre dans une installation 10 existante en procédant aux modifications nécessaires de la roue de transfert 30, en particulier en vue d'introduire la bride 40 grâce à laquelle la partie supérieure 30A est escamotable depuis l'extérieur de l'installation 10.

La présente invention est considérée comme susceptible d'application industrielle et tout particulièrement susceptible d'être mise en oeuvre dans une installation 10 pour la production de récipients 12 comportant une roue de transfert 30 de récipients, respectivement entre une première enceinte 14 comportant une unité de soufflage 16 et une deuxième enceinte 18 comportant une unité de remplissage, ladite roue 30 étant montée mobile entre au moins :
- une position de transfert dans laquelle la roue s'étend à travers une ouverture 24 commune aux enceintes 14, 18 pour assurer le transfert des récipients 12, et
- une position escamotée dans laquelle la roue est déplacée pour permettre la fermeture de l'ouverture 24 par des moyens d'obturation 26 associés en vue de la décontamination de la deuxième enceinte 18, et dans laquelle le déplacement de ladite roue de transfert 30 entre lesdites positions est commandé manuellement ou automatiquement depuis l'extérieur de la première enceinte 14 et/ou de la deuxième enceinte 18 l'installation 10.

## Revendications

1. Installation (10) pour la production de récipients (12), notamment de bouteilles, comportant au moins :
- une première enceinte (14) de protection délimitant une première zone (Z1) à l'intérieur de laquelle est agencée au moins une unité de soufflage (16) de récipients,
- une deuxième enceinte (18) de confinement qui, au moins en partie accolée à la première enceinte (14) attenante par une partie commune (22), délimite une deuxième zone (Z2) stérile à l'intérieur de laquelle est agencée au moins une unité de remplissage (20) des récipients (12) fabriqués,
- au moins une ouverture (24) qui, réalisée dans ladite partie commune (22) desdites première et deuxième enceintes (14, 18), est destinée à permettre le transfert des récipients (12) de l'unité de soufflage (16) à l'unité de remplissage (20),
- des moyens d'obturation (26) de ladite ouverture (24) qui sont aptes à être déplacés sélectivement entre une position ouverte dans laquelle les moyens d'obturation (26) autorisent ledit transfert des récipients (12) à travers l'ouverture (24) commune et une position fermée dans laquelle les moyens d'obturation interdisent tout transfert en isolant la deuxième enceinte pour réaliser une décontamination de l'unité de remplissage, et
- au moins un dispositif de transfert (28) comportant au moins une roue de transfert (30) qui, adjacente à ladite ouverture (24), est apte à transférer les récipients (12) entre l'unité de soufflage (16) et l'unité de remplissage (20),
**caractérisée en ce que** au moins une partie (30A) de la roue de transfert (30) est montée mobile entre au moins :
- une première position de transfert dans laquelle ladite au moins une partie (30A) de la roue s'étend à travers l'ouverture (24) pour assurer le transfert des récipients (12) lors du fonctionnement de l'installation (10) dans un mode, dit de production, et
- une deuxième position escamotée dans laquelle ladite au moins une partie (30A) de la roue est déplacée pour permettre la fermeture de l'ouverture (24) par les moyens d'obturation (26) associés en vue du fonctionnement de l'installation dans un mode, dit de décontamination,
**en ce que** le déplacement de ladite partie mobile (30A) de la roue de transfert (30) entre lesdites positions de transfert et escamotée est commandé depuis l'extérieur de l'installation (10),
et **en ce que** la roue de transfert (30) comporte une bride (40) comportant au moins un élément supérieur (42) et un élément inférieur (414) de bride respectivement solidaires d'une partie supérieure (30A) et d'une partie inférieure (30B) de la roue (30),
lesdits éléments de bride (42, 44) étant reliés au moins par des moyens d'articulation (46) aptes à permettre le déplacement,
entre la position de transfert et la position escamotée, de la partie supérieure (30A) de la roue (30) formant ladite partie mobile par rapport à la partie inférieure (30B) de la roue (30) formant une partie fixe.

2. Installation (10) selon la revendication 1, **caractérisée en ce que** les moyens d'articulation (46) sont constitués par un pivot (48) déterminant un axe de pivotement (A) autour duquel l'élément supérieur (42) de bride pivote par rapport à l'élément inférieur (44) de bride suivant un mouvement de giration correspondant à la course de la partie supérieure (30A) mobile de la roue (30) entre lesdites positions de transfert et escamotée.

3. Installation (10) selon l'une des revendications 1 ou 2, **caractérisée en ce que** la roue de transfert (30) comporte des moyens de verrouillage (50) aptes à immobiliser la partie supérieure (30A) par rapport à la partie inférieure (30B) de la roue, respectivement dans la position de transfert ou la position escamotée.

4. Installation (10) selon la revendication 3, **caractérisée en ce que** les moyens de verrouillage (50) de la roue sont constitués par au moins une goupille (52) destinée à être sélectivement introduite dans un premier logement (54) s'étendant à travers les éléments supérieur (42) et inférieur (44) de la bride (40) dans lequel la goupille (52) immobilise les parties supérieure (30A) et inférieure (30B) de roue dans une position déterminée correspondant la position de transfert ou introduite dans un deuxième logement (56) s'étendant à travers les éléments supérieur (42) et inférieur (44) de la bride (40) dans lequel la goupille (52) immobilise les parties supérieure (30A) et inférieure (30B) de roue dans une autre position déterminée correspondant la position escamotée de la roue de transfert (30).

5. Installation (10) selon la revendication 4, **caractérisée en ce que** l'installation (10) comporte des moyens de butée (68) qui, aptes à coopérer avec une partie de l'élément supérieur (42) de bride, détermine la position de la partie supérieure (30A) mobile de la roue (30) dans ladite position escamotée, notamment de manière à faciliter l'introduction de la goupille (52) de verrouillage dans le deuxième logement (56).

6. Installation (10) selon la revendication 1, **caractérisée en ce que** la roue de transfert (30) comporte des moyens de blocage (70) qui sont destinés à assurer sélectivement le blocage en rotation de la partie inférieure (30B) fixe de la roue (30) par rapport aux moyens (72) d'entraînement en rotation de la roue de transfert (30) lorsque l'installation (10) est en mode décontamination.

7. Installation (10) selon la revendication 6, **caractérisée en ce que** les moyens de blocage (70) en rotation sont constitués par au moins un doigt (76) qui est reçu dans une encoche (78) complémentaire que comporte l'élément inférieur (44) de bride solidaire de la partie inférieure (30B) de la roue.

8. Installation (10) selon l'une quelconque des revendications précédentes, **caractérisée en ce que** la première enceinte (14) de protection comporte des moyens de manipulation (84), tels qu'au moins un gant (88, 90) relié de manière étanche à une ouverture (86) réalisée dans la première enceinte (14), pour commander manuellement au moins le déplacement de la roue de transfert (30) entre la position de transfert et la position escamotée depuis l'extérieur de la première enceinte (14) de l'installation (10).

9. Installation (10) selon l'une quelconque des revendications précédentes, **caractérisée en ce que** l'installation (10) comporte au moins un actionneur pour commander automatiquement au moins le déplacement de la roue de transfert (30) entre la position de transfert et la position escamotée depuis l'extérieur de la première enceinte (14) de l'installation (10).

## Patentansprüche

1. Anlage (10) zur Produktion von Behältern (12), insbesondere von Flaschen, die mindestens aufweist:
- eine erste Schutzkammer (14), die eine erste Zone (Z1) begrenzt, innerhalb der mindestens eine Einheit (16) zum Blasen von Behältern angeordnet ist,
- eine zweite Einschließungskammer (18), die, zumindest zum Teil durch einen gemeinsamen Teil (22) an die angrenzende erste Kammer (14) angefügt, eine sterile zweite Zone (Z2) begrenzt, innerhalb der mindestens eine Fülleinheit (20) der hergestellten Behälter (12) angeordnet ist,
- mindestens eine Öffnung (24), die, hergestellt im gemeinsamen Teil (22) der ersten und zweiten Kammern (14, 18), dazu bestimmt ist, die Übertragung der Behälter (12) von der Blaseinheit (16) zur Fülleinheit (20) zu erlauben,
- Verschlusseinrichtungen (26) der Öffnung (24), die selektiv zwischen einer offenen Stellung, in der die Verschlusseinrichtungen (26) die Übertragung des Behälter (12) durch die gemeinsame Öffnung (24) erlauben, und einer geschlossenen Stellung verschoben werden können, in der die Verschlusseinrichtungen jede Übertragung verhindern, indem sie die zweite Kammer isolieren, um eine Dekontamination der Fülleinheit durchzuführen, und
- mindestens eine Übertragungsvorrichtung (28), die mindestens ein Übertragungsrad (30) aufweist, das, der Öffnung (24) benachbart, die Behälter (12) zwischen der Blaseinheit (16) und der Fülleinheit (20) übertragen kann,
**dadurch gekennzeichnet, dass** mindestens ein Teil (30A) des Übertragungsrads (30) beweglich montiert ist zwischen mindestens:
- einer ersten Übertragungsstellung, in der der mindestens eine Teil (30A) des Rads sich durch die Öffnung (24) erstreckt, um in einem sogenannten Produktionsmodus die Übertragung der Behälter (12) beim Betrieb der Anlage (10) zu gewährleisten, und
- einer zweiten eingezogenen Stellung, in der der mindestens eine Teil (30A) des Rads verschoben ist, um das Schließen der Öffnung (24) durch die zugeordneten Verschlusseinrichtungen (26) für den Betrieb der Anlage in einem sogenannten Dekontaminationsmodus zu erlauben,
dass die Verschiebung des beweglichen Teils (30A) des Übertragungsrads (30) zwischen der Übertragungs
und der eingezogenen Stellung von außerhalb der Anlage (10) gesteuert wird, und dass das Übertragungsrad (30) einen Flansch (40) aufweist, der mindestens ein oberes (42) und ein unteres Flanschelement (44) aufweist, die mit einem oberen Teil (30A) bzw. einem unteren Teil (30B) des Rads (30) fest verbunden sind, wobei die Flanschelemente (42, 44) mindestens durch Anlenkeinrichtungen (46) verbunden sind, die die Verschiebung zwischen der Übertragungsstellung und der eingezogenen Stellung des den beweglichen Teil formenden oberen Teils (30A) des Rads (30) bezüglich des einen ortsfesten Teil formenden unteren Teils (30B) des Rads (30) ermöglichen können.

2. Anlage (10) nach Anspruch 1, **dadurch gekennzeichnet, dass** die Anlenkeinrichtungen (46) aus einem Drehzapfen (48) bestehen, der eine Schwenkachse (A) bestimmt, um die das obere Flanschelement (42) bezüglich des unteren Flanschelements (44) gemäß einer Rotationsbewegung entsprechend dem Hub des oberen beweglichen Teils (30A) des Rads (30) zwischen der Übertragungsstellung und der eingezogenen Stellung schwenkt.

3. Anlage (10) nach einem der Ansprüche 1 oder 2, **dadurch gekennzeichnet, dass** das Übertragungsrad (30) Verriegelungseinrichtungen (50) aufweist, die den oberen Teil (30A) bezüglich des unteren Teils (30B) des Rads in der Übertragungsstellung bzw. der eingezogenen Stellung arretieren können.

4. Anlage (10) nach Anspruch 3, **dadurch gekennzeichnet, dass** die Verriegelungseinrichtungen (50) des Rads aus mindestens einem Stift (52) bestehen, der dazu bestimmt ist, selektiv in eine erste Aufnahme (54), die sich durch das obere (42) und das untere Element (44) des Flanschs (40) erstreckt, wobei der Stift (52) den oberen (30A) und den unteren Teil (30B) des Rads in einer bestimmten Stellung arretiert, die der Übertragungsstellung entspricht, bzw. in eine zweite Aufnahme (56) eingeführt zu werden, die sich durch das obere (42) und das untere Element (44) des Flanschs (40) erstreckt, wobei der Stift (52) den oberen (30A) und den unteren Teil (30B) des Rads in einer anderen bestimmten Stellung arretiert, die der eingezogenen Stellung des Übertragungsrads (30) entspricht.

5. Anlage (10) nach Anspruch 4, **dadurch gekennzeichnet, dass** die Anlage (10) Anschlageinrichtungen (68) aufweist, die, fähig, mit einem Teil des oberen Flanschelements (42) zusammenzuwirken, die Stellung des beweglichen oberen Teils (30A) des Rads (30) in der eingezogenen Stellung bestimmen, insbesondere, um die Einführung des Verriegelungsstifts (52) in die zweite Aufnahme (56) zu vereinfachen.

6. Anlage (10) nach Anspruch 1, **dadurch gekennzeichnet, dass** das Übertragungsrad (30) Blockiereinrichtungen (70) aufweist, die dazu bestimmt sind, selektiv die Drehblockierung des ortsfesten unteren Teils (30B) des Rads (30) bezüglich der Drehantriebseinrichtungen (72) des Übertragungsrads (30) zu gewährleisten, wenn die Anlage (10) im Dekontaminationsmodus ist.

7. Anlage (10) nach Anspruch 6, **dadurch gekennzeichnet, dass** die Drehblockiereinrichtungen (70) aus mindestens einem Finger (76) bestehen, der in einer komplementären Aussparung (78) aufgenommen wird, die das untere Flanschelement (44) aufweist, das fest mit dem unteren Teil (30B) des Rads verbunden ist.

8. Anlage (10) nach einem der vorhergehenden Ansprüche, **dadurch gekennzeichnet, dass** der erste Schutzraum (14) Handhabungseinrichtungen (84), wie mindestens einen Handschuh (88, 90) aufweist, der dicht mit einer im ersten Raum (14) ausgeführten Öffnung (86) verbunden ist, um manuell zumindest die Verschiebung des Übertragungsrads (30) zwischen der Übertragungsstellung und der eingezogenen Stellung von außerhalb der ersten Kammer (14) der Anlage (10) zu steuern.

9. Anlage (10) nach einem der vorhergehenden Ansprüche, **dadurch gekennzeichnet, dass** die Anlage (10) mindestens ein Stellglied aufweist, um mindestens die Verschiebung des Übertragungsrads (30) zwischen der Übertragungsstellung und der eingezogenen Stellung von außerhalb der ersten Kammer (14) der Anlage (10) automatisch zu steuern.

## Claims

1. Installation (10) for the production of containers (12), notably bottles, including at least:
- a protective or first enclosure (14) delimiting a first area (Z1) inside which is placed at least one container blower unit (16),
- a confinement or second enclosure (18) which at least in part adjoins the first enclosure (14) via a common part (22) and delimits a sterile second area (Z2) inside which is placed at least one filler unit (20) for filling the finished containers (12),
- at least one opening (24) in said common part (22) of said first and second enclosures (14, 18) adapted to allow the transfer of containers (12) from the blower unit (16) to the filler unit (20),
- means (26) for shutting off said opening (24) adapted to be moved selectively between an open position in which the shutting off means (26) allow said transfer of containers (12) through the common opening (24) and a closed position in which the shutting off means prevent transfer by isolating the second enclosure in order to decontaminate the filler unit, and
- at least one transfer device (28) including at least one transfer wheel (30) adjacent said opening (24) adapted to transfer containers (12) between the blower unit (16) and the filler unit
**characterized in that** at least one part (30A) of the transfer wheel (30) is mounted to be mobile between at least:
- a transfer or first position in which said at least one part (30A) of the wheel extends through the opening (24) to transfer containers (12) during operation of the installation (10) in a production mode, and
- a retracted or second position in which said at least one part (30A) of the wheel is moved to allow closing of the opening (24) by the associated shutting off means (26) for operation of the installation in decontamination mode,
**in that** the movement of said mobile part (30A) of the transfer wheel (30) between said transfer position and said retracted position is driven from outside the installation (10),
and **in that** the transfer wheel (30) includes a flange (40) including at least an upper flange element (42) and a lower flange element (44) respectively fastened to an upper part (30A) and a lower part (30B) of the wheel (30), said flange elements (42, 44) being connected at least by articulation means (46) adapted to allow movement between the transfer position and the retracted position of the upper part (30A) of the wheel (30) forming said part mobile relative to the lower part (30B) of the wheel (30) forming a fixed part.

2. Installation (10) according to claim 1, **characterized in that** the articulation means (46) consist of a pivot (48) defining a pivot axis (A) about which the upper flange element (42) pivots relative to the lower flange element (44) with a gyratory movement corresponding to the travel of the mobile upper part (30A) of the wheel (30) between said transfer position and said retracted position.

3. Installation (10) according to either of claims 1 or 2, **characterized in that** the transfer wheel (30) includes locking means (50) adapted to immobilize the upper part (30A) of the wheel relative to the lower part (30B) respectively in the transfer position and in the retracted position.

4. Installation (10) according to claim 3, **characterized in that** the means (50) for locking the wheel consist of at least one pin (52) adapted to be introduced selectively into a first housing (54) extending through the upper element (42) and the lower element (44) of the flange (40) in which the pin (52) immobilizes the upper part (30A) and the lower part (30B) of the wheel in a particular position corresponding to the transfer position or into a second housing (56) extending through the upper element (42) and the lower element (44) of the flange (40) in which the pin (52) immobilizes the upper part (30A) and the lower part (30B) of the wheel in another particular position corresponding to the retracted position of the transfer wheel (30).

5. Installation (10) according to claim 4, **characterized in that** the installation (10) includes abutment means (68) which are adapted to cooperate with part of the upper flange element (42) to determine the position of the mobile upper part (30A) of the wheel (30) in said retracted position, notably to facilitate introduction of the locking pin (52) into the second housing (56).

6. Installation (10) according to claim 1, **characterized in that** the transfer wheel (30) includes immobilizing means (70) adapted selectively to immobilize the fixed lower part (30B) of the wheel (30) against rotation relative to the means (72) for driving the transfer wheel (30) in rotation when the installation (10) is in decontamination mode.

7. Installation (10) according to claim 6, **characterized in that** the rotation immobilizing means (70) consist of at least one finger (76) that is received in a complementary notch (78) in the lower flange member (44) fastened to the lower part (30B) of the wheel.

8. Installation (10) according to any of the preceding
claims, **characterized in that** the protective or first enclosure (14) includes manipulator means (84) such as at least one glove (88, 90) connected in sealed manner to an opening (86) in the first enclosure (14) at least to move the transfer wheel (30) manually between the transfer position and the retracted position from outside the first enclosure (14) of the installation (10).

9. Installation (10) according to any of the preceding claims, **characterized in that** the installation (10) includes at least one actuator at least for moving the transfer wheel (30) automatically between the transfer position and the retracted position from outside the first enclosure (14) of the installation (10).
